(19) **Europäisches Patentamt / European Patent Office / Office européen des brevets**

(11) **EP 1 683 668 B1**

(12) **EUROPEAN PATENT SPECIFICATION**

(45) Date of publication and mention
of the grant of the patent:
**10.02.2010 Bulletin 2010/06**

(51) Int Cl.:
**B60J 3/04** (2006.01)

(21) Application number: **05018071.0**

(22) Date of filing: **19.08.2005**

(54) **Variable transmissivity window system**

System für eine in der Transparenz einstellbare Scheibe

Système de vitre à transmissivité variable

(84) Designated Contracting States:
**DE FR**

(30) Priority: **19.01.2005 JP 2005011797**

(43) Date of publication of application:
**26.07.2006 Bulletin 2006/30**

(73) Proprietor: **Hitachi, Ltd.**
**Tokyo (JP)**

(72) Inventors:
• **Furusawa, Isao**
**Chiyoda-ku**
**Tokyo 100-8220 (JP)**

• **Kasuya, Hiroyuki**
**Chiyoda-ku**
**Tokyo 100-8220 (JP)**
• **Ouchi, Katsuo**
**Chiyoda-ku**
**Tokyo 100-8220 (JP)**

(74) Representative: **MERH-IP**
**Matias Erny Reichl Hoffmann**
**Paul-Heyse-Strasse 29**
**80336 München (DE)**

(56) References cited:
WO-A-99/62732      WO-A1-03/074307
DE-A1- 10 057 393      DE-A1- 19 814 094

EP 1 683 668 B1

**Description**

BACKGROUND OF THE INVENTION

The present invention relates to a window system which can arbitrarily modify the transmissivity of a window or windshield of a vehicle according to the ambient condition of the vehicle.

When sunlight comes into a vehicle, the occupant of the vehicle has conventionally used a sun visor to shield occupant's eyes from direct sunlight or glare. However, the use of the sun visor involves troublesome problems that the occupant cannot also see necessary light other than the undesirable direct sun light and cannot know information necessary for driving, and that the occupant is also required to adjust the position of the sun visor for it.

As one of prior arts for improving such circumstances, it is proposed to adjust the transmissivity of a car windshield to avoid glare, e.g., as shown in JP-A-5-203906. As disclosed in JA-5-203906, an optical element is mounted in the vicinity of occupant's eye so that transmission light incident to the optical element is reflected in the incident direction, the reflected light is directed to an optical sensor provided on the windshield, and the transmissivity of a block on the surface of the windshield, on which the optical element is provided, is adjusted on the basis of an output from the optical element.

Document DE 198 14 094 A1 shows an arrangement with local, selectively electrically driven darkening elements for selective local darkening of a plat in a transmission region of a noise source through a plate to form a noise or aperture protection plate. An optical system determines the position of the noise source in size, direction and intensity on one side of the plate.

In document WO 03/074307 A1, a system for imposing a filter between a vehicle driver's eyes and a source of light including at least one detector facing inward into a compartment in the vehicle toward a likely position of the head of a vehicle driver is shown. A filter, such as pixelated screen, is imposed between the sources of light and the driver's eyes based on the location of the driver's eyes.

Document DE 199 52 945 A1 describes a method for reducing dazzling risk of a person looking through a screen or window, by means of determining the location on the screen or window through which the dazzling light enters to reach the person's eyes, and by influencing the screen or window in the region of the ascertained points of entrance of the light or dazzle such that the light falling on the person's eyes is attenuated.

SUMMARY OF THE INVENTION

However, the technique disclosed in JP-A-5 203906 is a system based on occupant's wearing of glasses. This impractically compels the occupant to wear the glasses. Further, since the occupant wearing the glasses is moving at all times, this involves another problem that the transmissivity adjustment requires complex control.

In view of the problems in the prior art, it is therefore an object of the present invention to provide a variable transmissivity window system which can positively decide whether or not incoming light gives glare to the occupant (an occupant, a driver, a passenger, etc.) while avoiding occupant's burden and can modify the transmissivity of light giving glare to the occupant through a window or windshield.

In accordance with an aspect of the present invention, the above object is attained by providing a variable window system which includes an imaging unit for detecting and processing light emitted from a light source, a transmissivity control unit for controlling the transmissivity of light passed through the windshield on the basis of information about the light source sent from the imaging unit, and a transmissivity modifying unit for modifying a transmissivity of each of blocks into which the windshield is divided on the basis of control information sent from the transmissivity control unit. The imaging unit calculates light source information including the direction, size and intensity of the light source. The transmissivity control unit, on the basis of the light source information, calculates a position for the transmissivity of the windshield block to be modified, a range of the position for the transmissivity to be modified, and a value of the position for the transmissivity to be; and controls the transmissivity modifying unit.

In accordance with another aspect of the present invention, there is provided a variable transmissivity window system which comprises an imaging unit for detecting and processing light emitted from a light source, a transmissivity control unit for controlling the transmissivity of light passed through a windshield on the basis of light source information sent from the imaging unit, a transmissivity modifying unit for modifying the transmissivity of each of blocks into which the windshield is divided on the basis of control information sent from the transmissivity control unit, and a detection unit for detecting an occupant's eye position with respect to the windshield. The imaging unit calculates the light source information including the direction, size and intensity of the light source. The transmissivity control unit, on the basis of the light source information issued from the imaging unit and the occupant's eye positional information issued from the detection unit, calculates a position for the transmissivity of the windshield block to be modified, a range of the position for transmissivity to be modified, and a value of the transmissivity to be modified; and controls the transmissivity modifying unit.

In accordance with the present invention, the system can positively decide whether or not incoming light gives glare to the occupant according to ambient light level. When incoming light gives a glare to the occupant, the system modifies a transmissivity at a point on the windshield through which the glare giving light passes to avoid the glare while passing most information necessary for driving through the other area of the windshield.

When such light as to give glare to the occupant comes, the system modifies a threshold for lane departure warning, and controls vehicle in a non-acceleration mode, and displays a video of a scene around a light source as a glaring source, thus contributing to safe running.

Other objects, features and advantages of the invention will become apparent from the following description of the embodiments of the invention taken in conjunction with the accompanying drawings.

BRIEF DESCRIPTION OF THE DRAWINGS

FIG. 1 shows a schematic arrangement of a variable transmissivity window system in accordance with a first embodiment of the present invention;

FIG. 2 is a block diagram for explaining the operation of the variable transmissivity window system of the first embodiment;

FIG. 3 shows a schematic arrangement of a variable transmissivity window system in accordance with a second embodiment of the present invention;

FIG. 4 is a block diagram for explaining the operation of the variable transmissivity window system of the second embodiment;

FIG. 5 shows a structure of a transmissivity modifying unit applied to the variable transmissivity window system of the present embodiment;

FIGs. 6A and 6B show video data about a light source in front of a vehicle detected by a camera in the variable transmissivity window system of the present embodiment;

FIG. 7 is a flowchart showing operations of calculating a position, size and intensity of the light source detected by the camera used in the present embodiment;

FIG. 8 is a flowchart for explaining operations until an instruction for transmissivity modification is issued on the basis of light source data in the variable transmissivity window system of the present embodiment;

FIG. 9 shows positions of various sensors provided on a vehicle seat;

FIG. 10 is a diagram for explaining calculation of a face position on a display screen;

FIG. 11 is a diagram (in plain view) for explaining calculation of a transmissivity modification position;

FIG. 12 is a diagram (in side view) for explaining the calculation of the transmissivity modification position;

FIG. 13 is a diagram for explaining the calculation of the transmissivity modification position (when a coordinate origin of FIG. 12 is changed); and

FIG. 14 is a diagram for explaining how to change a threshold for lane departure warning.

DESCRIPTION OF THE EMBODIMENTS

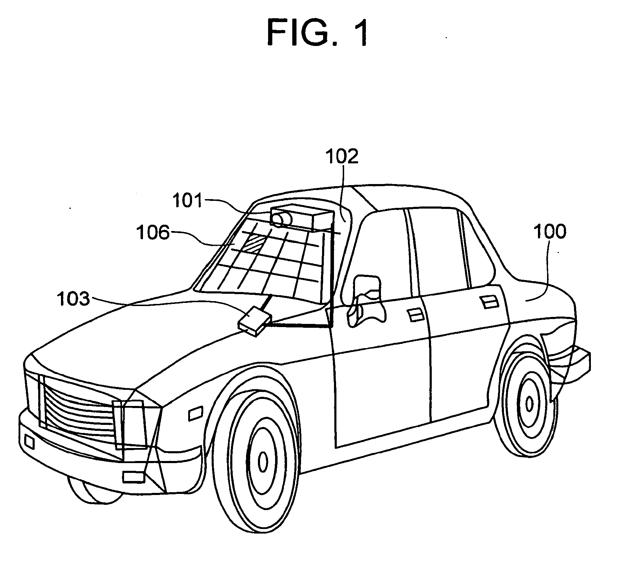

Variable transmissivity window systems in accordance with embodiments of the present invention will be explained in detail by referring to FIGS. 1 to 14.

Embodiment 1:

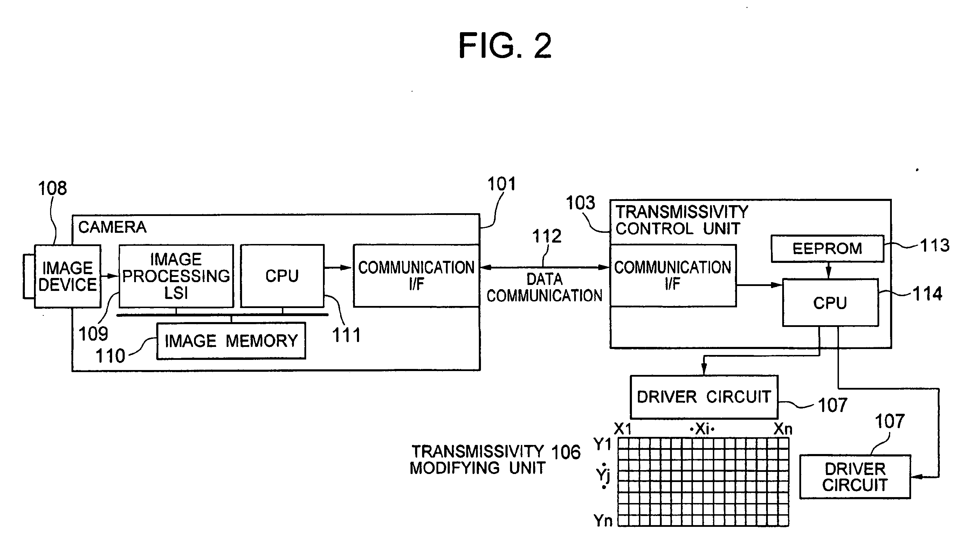

FIG. 1 shows a schematic arrangement of a variable transmissivity window system in accordance with a first embodiment of the present invention. FIG. 2 is a block diagram for explaining the operation of the variable transmissivity window system in accordance with the first embodiment. In the drawings, reference numeral 100 denotes a vehicle, numeral 101 denotes a camera, 102 denotes a windshield, 103 a transmissivity control unit, 106 a transmissivity modifying unit, 107 a driver circuit, 108 an image device, 109 an image processing LSI, 110 an image memory, 111 and 114 CPUs, 112 a data communication network, 113 an EEPROM, respectively.

In FIG. 1, the camera 101 is mounted on the ceiling of an interior chamber of the vehicle 100 to be oriented forward. The transmissivity control unit 103 for controlling the transmissivity of each of blocks into which the windshield is divided, is provided within the vehicle 100. More specifically, the windshield 102 is divided into small blocks, and the transmissivity modifying unit 106 for arbitrarily modifying the transmissivity of each block is built in the windshield 102. The camera 101 detects a light source in front of the vehicle, and calculates data about the direction (which determines the position of the block whose transmissivity is to be modified) of the light source, the size (which is the size or diameter of the light source and determines the number of blocks whose transmissivity are to be modified) of the light source, and the intensity (which is the brightness or light level of the light source detected by the camera and determines the numeric value of the transmissivity) of the light source (refer to the structure of the camera 101 shown in FIG. 2). These data are transmitted to the transmissivity control unit 103. The word "light source" as used herein refers to light that gives glare to the occupant, generally refers to light from an oncoming vehicle, sunlight, etc. However, the light source is not limited to the above example.

The transmissivity control unit 103, on the basis of the information sent from the camera 101, calculates a position and range of the front windshield for the transmissivity to be modified and a transmissivity of the windshield to avoid the occupant from getting glare. These data are transmitted to a driver circuit in the transmissivity modifying unit 106. The driver circuit performs voltage control over a location where transmissivity is modified by the transmissivity modifying unit 106.

In the block diagram of the first embodiment of FIG. 2, the image device 108 in the camera 101 picks up a video of a scene in front of the vehicle 100. The image processing LSI 109 transmits the picked-up digital video data to the image memory 110. The CPU 111 processes the video data of the image memory 110 and calculates data on the direction, size and intensity of the light source. The calculated data is transmitted to the transmissivity control unit 103 via the data communication network 112 such as CAN (control area network).

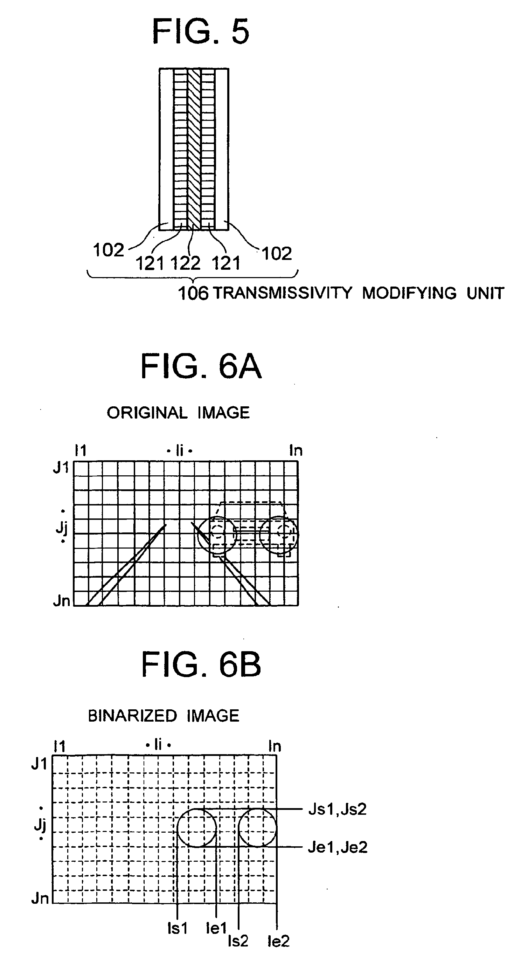

A correspondence relation between the direction and size of the light source and the control position and range of the transmissivity modifying unit 106 is written in the EEPROM 113 of the transmissivity control unit 103. Also written in the EEPROM 113 is a correspondence relation between the intensity of the light source and the transmissivity of the transmissivity modifying unit 106. The CPU 114 of the transmissivity control unit 103, on the basis of the data written in the EEPROM 113 and the data transmitted from the camera 101, calculates a control position, range and transmissivity of the transmissivity modifying unit 106. The transmissivity control unit 103 supplies a drive signal to the driver circuit 107, which in turn instructs the transmissivity modifying unit 106 to modify the transmissivity for the specified control position and range according to the drive signal. FIG. 5 shows a structure of the transmissivity modifying unit 106 applied to the variable transmissivity window system in accordance with the present embodiment. A liquid crystal 122 is sealed between transparent electrodes 121, and the crystal sealed with transparent electrodes 121 is disposed between the windshield panels 102. The transparent electrode 121 is set so that a voltage can be applied to a given liquid crystal position $(Xi, Yj)$. In a usual mode (in a no voltage application mode), since the liquid crystal 122 is oriented in a random direction, its transmissivity is low. When a voltage is applied between both ends of the liquid crystal 122 from the driver circuit 107, parts of the liquid crystal 122 to which the voltage is applied, are oriented in an electric field direction and thus its transmissivity becomes high.

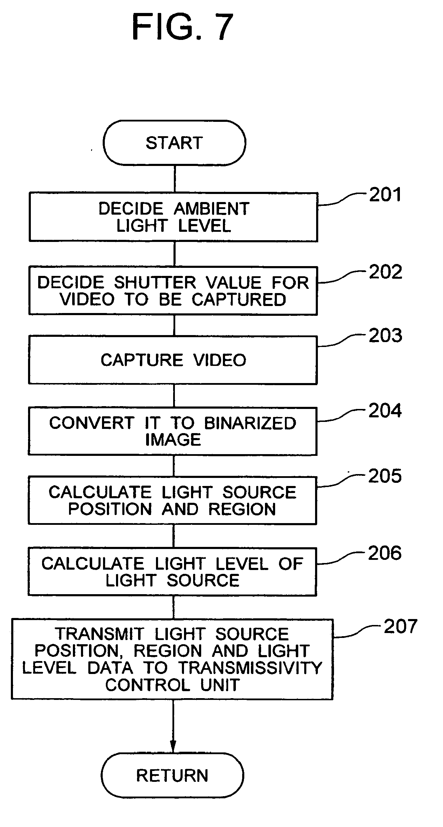

FIGs. 6A and 6B show video data used when a light source present in front of the vehicle 100 is detected using the camera 101 of the variable transmissivity window system in accordance with the present embodiment. A position (direction), size (region) and intensity (light level) of the light source in front of the vehicle are calculated according to a flowchart of FIG. 7. More specifically, in a step 201, the camera decides an ambient light level outside the vehicle 100. In the decision, the camera may use information from an illumination sensor or may use data on the camera video. When data on the camera video is used, a part of the data is used as a light level decision region and the camera performs shutter control in such a manner that the light level decision region has a constant density value. The camera calculates an ambient light level on the basis of the shutter value and the density value of the light level decision region. Since a threshold when the occupant gets glare in daytime is different from that when he or she gets glare in nighttime, the camera is required to first calculate the ambient light level.

Next, the camera decides a shutter value for a video to be captured (step 202). Since the light level at which person gets glare varies according to the ambient light level, the shutter value in the step 202 is set at such a value that the person can decide the presence of a glaring light source. For example, assuming that the light level (brightness) at which person gets glare is 10,000 cd/m$^2$, then the shutter value is selected so that 10,000 cd/m$^2$ corresponds to a center of the intensity value of the video to be captured. The camera captures the video picked up with the selected shutter value (step 203), and uses it as an original image (refer to FIG. 6A).

In order to identify the light source, next, the original image is binarized so that a bright area is made white and a non-bright area is made black as shown in FIG. 6B (step 204). In this case, the light level, at which person's eye gets glare, varies according to the ambient light level. Thus a threshold, with which the binarization is carried out according to the ambient light level, is changed. In the illustrated example, an density value corresponding to 10,000 cd/m$^2$ in the step 202 becomes the threshold. Since a glaring region is a white region, the camera calculates a central position (direction) and a region (size) for the white region (step 205).

In the example illustrated in FIG. 6, two regions are calculated. In the first region, a first measure zone or block has a start point of $(Is1, Js1)$ and an end point of $(Ie1, Je1)$; while the second region has a start point of $(Is2, Js2)$ and an end point of $(Ie2, Je2)$. In order to decide the light level of the light source, an original image is picked up, the picked-up original image is binarized, a region in the binarized image is calculated which corresponds to the light source of the original image, and the camera then calculates a density value at which the region in the binarized image corresponds to the light source of the original image. On the basis of the density value and the shutter value, the camera calculates the light level of the light source with use of a conversion map previously prepared in the camera (step 206).

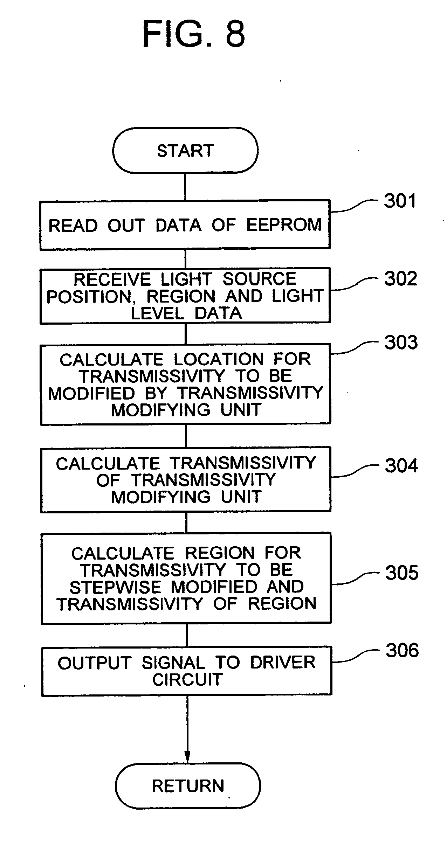

FIG. 8 shows a processing flow in the transmissivity control unit 103 until the unit instructs a transmissivity modification on the basis of data about a light source in the variable transmissivity window system in accordance with the present embodiment. Stored in the EEPROM 113 of the transmissivity control unit 103 are data about a correspondence relation between the position of the light source calculated in the camera 101 and the position of the transmissivity modifying unit 106, and data about a correspondence relation between the light level of the light source calculated in the camera 101 and the transmissivity of the transmissivity modifying unit 106. In a step 301, the transmissivity control unit reads out the data stored in the EEPROM.

The transmissivity control unit receives data about the position (direction), region (size) and light level (intensity) of the light source sent from the camera 101 (step 302). On the basis of the correspondence relation data, the transmissivity control unit calculates transmissivity modification locations $(X_i, Y_j)$,..., and $(X_i+\ell, Y_j+m)$ of the transmissivity modifying unit from the data about the received light source position and region (step 303). Upon calculation of the transmissivity modification locations, the transmissivity control unit decides them with the eye level of a standard size of occupant. The transmissivity control unit calculates the transmissivity of the transmissivity modifying unit from the received light level data on the basis of the correspondence relation data (step 304).

The transmissivity control unit calculates a region whose transmissivity is stepwise modified from a low value to a high value and also calculates a transmissivity for each region (step 305). The calculation of the transmissivity in the step 305 can be possible from a relation between the high and low transmissivities. For example, when there is a difference between the low and high transmissivities, the transmissivity control unit sets a wide range of regions whose transmissivities are stepwise changed, that is, the transmissivities of the regions vary at a constant rate. The transmissivity control unit outputs a signal to the driver circuit on the basis of the calculated result (step 306).

The present embodiment can calculate a light source giving glare to the occupant using the camera, shield such light on the windshield, avoid a high level of ambient glaring light from giving glare to the occupant, and contribute to safe driving while not blocking necessary information through the windshield. Further, since the system decides whether or not light from the light source gives glare to the occupant according to the ambient light level, the system can realize control nearly close to human control. In addition, since the transmissivity is stepwise changed, the occupant can see the windshield without noticing a boundary between locations whose transmissivities were changed.

Although the liquid crystal 122 has been employed as a means for modifying the transmissivity in the present embodiment, the present invention is not limited to the liquid crystal but any means may be used so long as the means can modify the transmissivity. Further, a wavelength for transmissivity modification is not limited to the wavelength of visible light. The wavelength of infrared light or ultraviolet light may be used for transmissivity modification. The transparent electrodes 121 and the liquid crystal 122 are disposed between the windshield panels in the present embodiment. However, the electrodes and the liquid crystal may be disposed between transparent films. In this case, the variable transmissivity window system in accordance with the present embodiment can be easily mounted in a later step.

Embodiment 2:

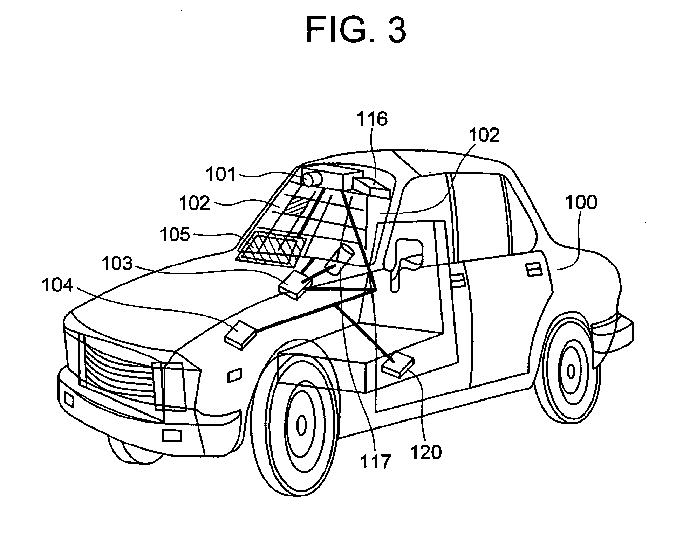

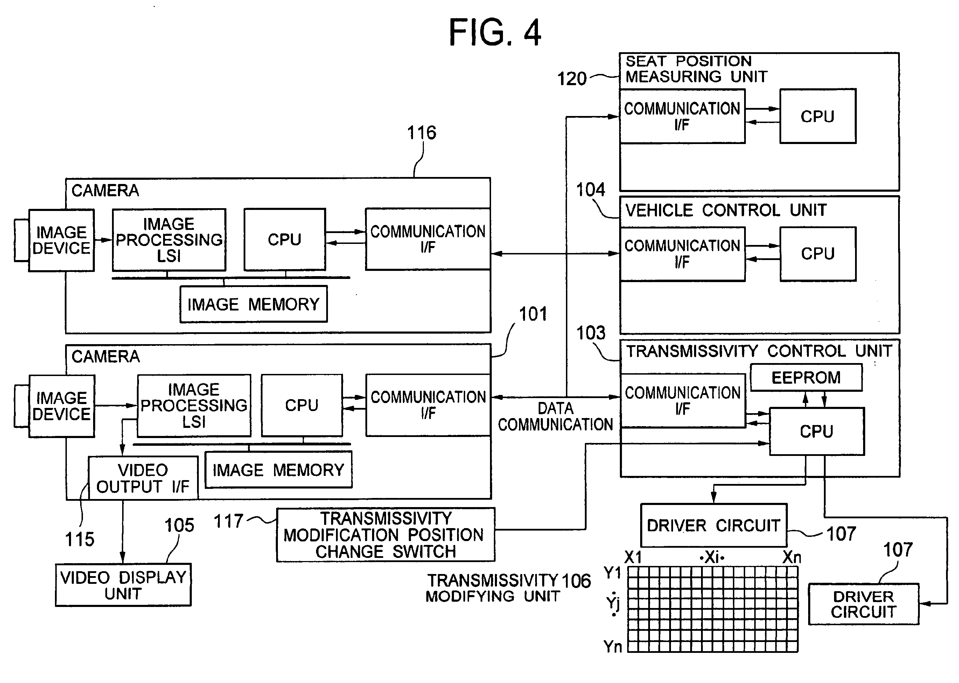

FIG. 3 shows a schematic arrangement of a variable transmissivity window system in accordance with a second embodiment of the present invention. FIG. 4 is a block diagram for explaining the operation of the variable transmissivity window system of the second embodiment. In the FIGS. 3 and 4, the same explanation as in FIGS. 1 and 2 is applied to constituent elements (having the same reference numerals) common to the first embodiment of FIGS. 1 and 2.

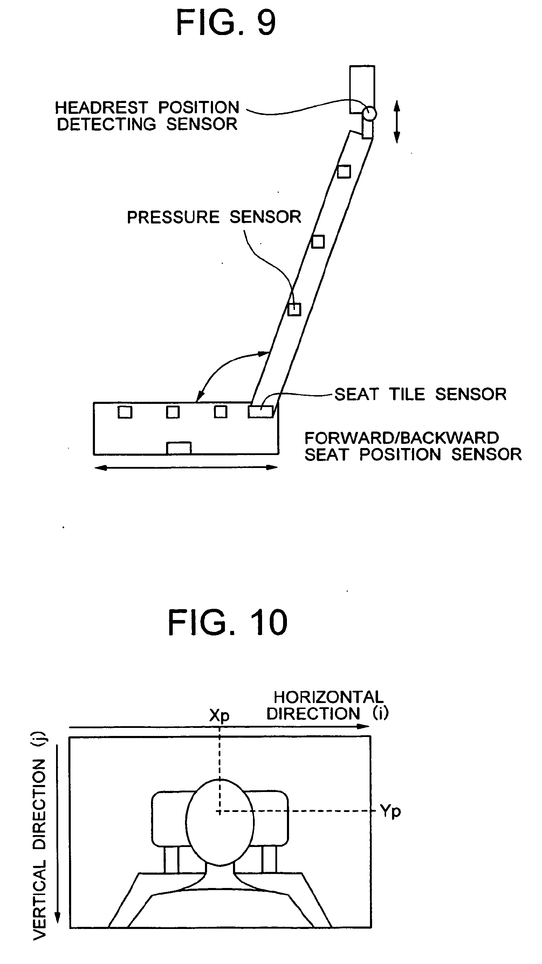

The second embodiment, in addition to the constituent elements of the first embodiment, includes a vehicle control unit 104, a seat position measuring unit 120, a camera 116 for vehicle interior image pickup (also referred to the interior-pointed camera), a video display unit 105, and a transmissivity modification position change switch 117. The seat position measuring unit 120 has a pressure sensor, a seat tilt sensor, a forward/backward seat position sensor, and a headrest position sensor, as shown in FIG. 9. The seat position measuring unit calculates positions of the seat (seat forward/backward position, seat tilt, and headrest height) and a position at which a pressure is applied to the seat. These calculated information are transmitted to the interior-pointed camera 116. The interior-pointed camera 116 compares these information with a pattern of nose, mouth and eye previously stored as face features, and identifies a face position, in particular, an eye position.

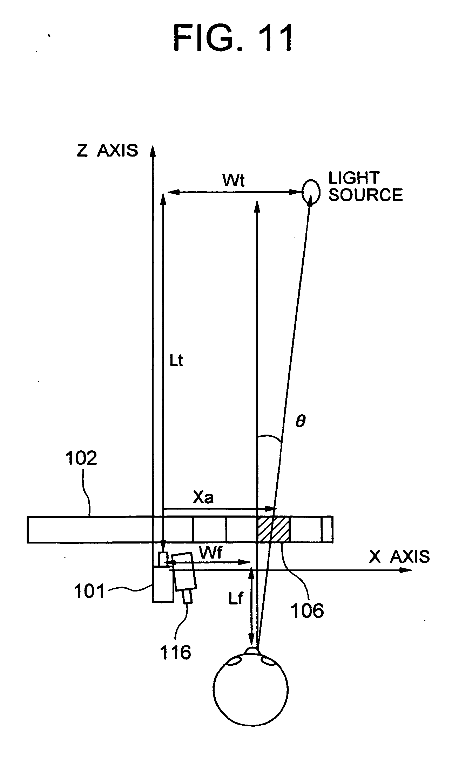

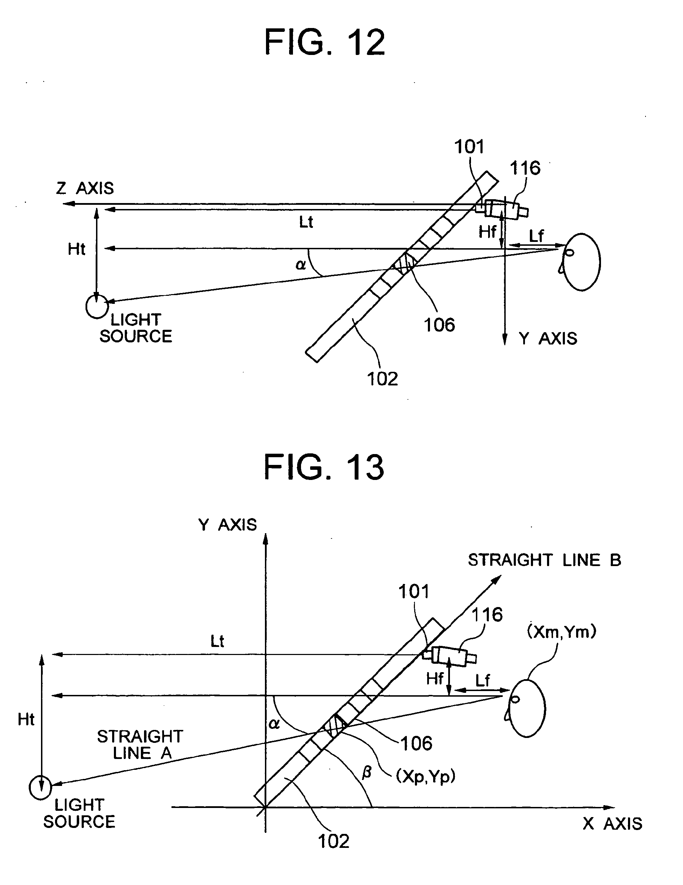

In the example illustrated in FIG. 10, the eye position is calculated as $(X_p, Y_p)$. Using the information from the seat position measuring unit 120; a distance Lf (a distance on the illustrated Z axis), a distance Wf (a distance on the illustrated X axis), and a distance Hf (a distance on the illustrated Y axis) between occupant's face and the exterior-pointed camera 101 are calculated, as shown in FIGS. 11, 12 and 13. More specifically, the interior-pointed camera calculates the distances Hf and Wf, while the seat position measuring unit calculates the distance Lf. When the interior-pointed camera is a stereo camera, the distances Lf, Wf and Hf can be calculated based on an output from the stereo camera. In this example, FIG. 11 shows an arrangement including the occupant, the light source, the exterior-pointed camera 101, the interior-pointed camera 116, the windshield 102, and the transmissivity modifying unit 106, when viewed from its top. Whereas, FIG. 12 is a diagram when the arrangement is viewed from its side. FIG. 13 is a diagram when the origin position of the axes in FIG. 12 is changed from the exterior-pointed camera 101 to a lower part of the windshield 102. The exterior-pointed camera 101 is used to detect the light source.

When the exterior-pointed camera 101 is a stereo camera, such distances (Lt, Wt, Ht) of the light source as shown in FIGS. 11, 12 and 13 can be calculated. When the exterior-pointed camera 101 is a monocular camera, such distances (Lt, Wt, Ht) to the light source as shown in FIGS. 11, 12 and 13 can be calculated on the basis of information from a radar or a laser (not shown).

The transmissivity control unit 103, on the basis of the positional data of the light source by the exterior-pointed camera 101 and the positional data of the occupant by the interior-pointed camera 116, calculates a position and a range for the transmissivity of the transmissivity modifying unit 106 to be modified and a transmissivity to be modified. How to calculate a position for transmissivity modification will be explained with reference to FIGS. 11, 12 and 13. Since the distance Lt in the Z axis direction from the light source to the exterior-pointed camera 101 and the distance Lf in the Z axis direction from the occupant to the exterior-pointed camera 101 are already calculated, a distance in the Z axis direction from the light source to the occupant is expressed as |Lt| + |Lf|. Since the distance Wt in the X axis direction from the light source to the exterior-pointed camera 101 and the distance Wf in the X axis direction from the occupant to the exterior-pointed 101 are already calculated, a distance in the X axis direction from the light source to the occupant is expressed as |Wt|-|Wf|. Further, since the distance Ht in the Y axis direction from the light source to the exterior-pointed camera 101 and the distance Hf in the Y axis direction from the occupant to the exterior-pointed camera 101 are already calculated, a distance in the Y axis direction from the light source to the occupant is expressed as |ht| - |hf|.

Thus, assuming a distance between the occupant and the windshield 102 is denoted by Lw in FIG. 11, then a windshield position Xa for transmissivity modification is expressed as follows.

$$\mathtt{Xa\ =\ Wf\ +\ Lw\ \times\ (|Wt|-|Wf|)/(|Lt|\ +\ |Lf|)...(1)}$$

Where, the equation shows how to calculate Lw. FIG. 13 shows a diagram when a coordinate origin is used in the lower part of the windshield 102. When an intersection point (Xp, Yp) between straight lines A and B is known, Lw can be calculated.

In this case, when an angle formed between the windshield 102 and the X axis is β, the straight line B is expressed as,

$$\mathtt{Xsin\beta\ -\ Ycos\beta\ =\ 0} \qquad\qquad \mathtt{...\ \ (2)}$$

When a face position is (Xm, Ym) and angle formed between the straight line A and the X axis is α, the straight line A can be expressed as,

$$\mathtt{(X\ -\ Xm)sin\alpha\ -(Y\ -\ Ym)cos\alpha\ =\ 0} \qquad\qquad \mathtt{...\ \ (3)}$$

The face position (Xm, Ym) is a known value calculated by the interior-pointed camera 116.

α can be found in the following manner. That is, a distance in the Z axis direction from the light source to the occupant is expressed as |Lt| + |Lf| in FIG. 12. A distance in the Y axis direction from the light source to the occupant is expressed as |ht| - |hf|. Hence α is expressed by an equation (4) which follows.

$$\mathtt{\alpha\ =\ tan^{-1}\{(|Ht|\ -\ |Hf|)/(|Lt|\ +\ |Lf|)\}} \qquad \mathtt{...\ (4)}$$

From the above equations (2), (3) and (4), an intersection point (Xp, Yp) between the straight lines A and B can be calculated. Thus Lw is expressed as follows.

$$Lw = Xm - Xp \qquad \dots (5)$$

Next, positions in the Y and X axis directions can be calculated from the above found (Xp, Yp).

Since the system cannot identify the position (distance) of a light source in sunlight, the system calculates the position of the transmissivity modifying unit on the basis of the correspondence relation data shown in the first embodiment. Further, the transmissivity control unit 103 is connected with the transmissivity modification position change switch 117. When the transmissivity modified position is different from that based on occupant's feeling, the transmissivity modified position can be changed by operating the transmissivity modification position change switch 117. For example, the transmissivity modification position change switch 117 is arranged so that the occupant can identify an upper, lower, left or right position relative to the above-calculated transmissivity modification region as a center and the occupant can enlarge a region at and around the center of the calculated transmissivity modification position. The occupant may slightly shift the position of the calculated transmissivity modification region based on occupant's glare feeling. Once modified, the transmissivity modification position can be determined based on the modified data.

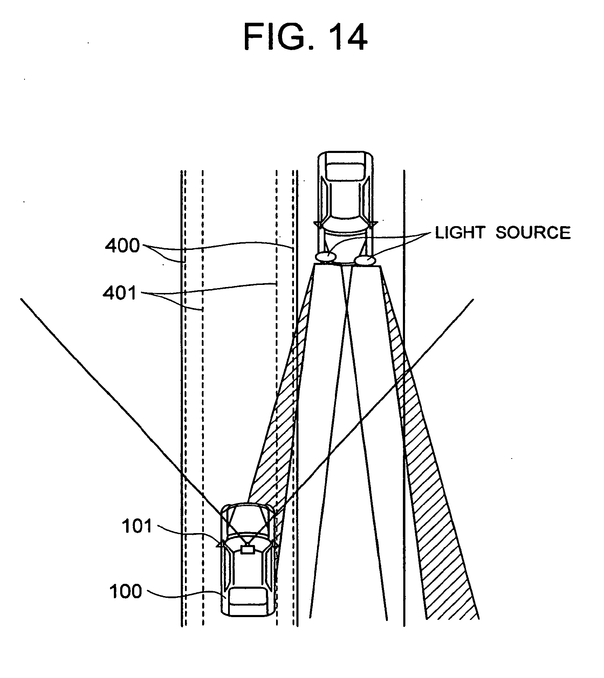

The position of a light source giving glare to the occupant and the intensity of the light source are transmitted from the exterior-pointed camera 101 to the vehicle control unit 104. Functions of vehicle departure warning control and speed control are built in the vehicle control unit 104. When a light source giving glare to the occupant is present in front of the vehicle (for example, when the intensity, size or position of the light source exceed their threshold, the threshold causing sounding of the vehicle departure warning is changed from a threshold 400 to a threshold 401 as shown in FIG. 14. Thus, when the vehicle comes close to the narrow threshold 401, the warning is sounded, previously informing the occupant of the lane departure. Further, such control as to avoid acceleration is carried out.

In other words, when a light source giving glare to the occupant is present in front of the vehicle, the threshold is changed from the warning threshold 400 close to a white line (detectable by the camera) defining a lane width to the warning threshold 401 to controllably prevent the vehicle from approaching the white line and avoid vehicle acceleration. Further, when the camera detects one side of the lane width along which the vehicle is running, it can also inform the occupant of the fact that the vehicle is running along the threshold 401 in the left or right side of the lane. The white line defining the vehicle width can be previously detected by the camera.

When a light source giving glare to the occupant is present (for example, when the light source information exceeds its glare threshold), the exterior-pointed camera 101 outputs a video of a scene surrounding the light source to the video display unit 105. In this case, when the exterior-pointed camera uses the image device 108 having a high dynamic range, the camera can photograph objects having different light levels including an object visible in darkness and a light source so as to avoid the bright or dark part of the objects having different light levels from overflowing or underflowing. As a result, the system can display an object hardly visible by light from a headlight of an oncoming vehicle on the video display unit 105, thus contributing to safe driving.

In the embodiment of the present invention explained above, the exterior-pointed camera 101 is mounted so as to photograph a scene in front of the vehicle 100. However, the exterior-pointed camera 101 may be mounted to photograph a scene in back of the vehicle and the transmissivity modifying unit 106 may be built in a rear windshield so that the transmissivity of the transmissivity modifying unit 106 is modified for light giving glare to the occupant from the rear side of the vehicle to soften and weaken the light.

In accordance with the present embodiment, since the position of a light source can be identified and the transmissivity modification position can be changed, the transmissivity modification position can be accurately determined. Further, when light giving glare is present, the threshold of the lane departure warning can be changed to be narrow and/or such control as to avoid acceleration can be carried out. In addition, since a video of a scene around a light source is displayed on the video display unit, this can contribute to vehicle's safe driving operation.

Although the present embodiment has been explained in connection with the example wherein the transmissivity modifying unit has such a structure as shown in FIG. 5, the present invention is not limited to the example, but a liquid crystal film may be bonded onto the windshield to control the transmissivity of the liquid crystal film. In place of bonding the liquid crystal film onto the windshield, the film may be applied to the windshield. Explanation has been made as to the control of the transmissivity of visible light in the present embodiment. However, in viewpoint of avoiding light harmful to occupant's eyes, ultraviolet light or infrared light other than the visible light may be detected to control the transmissivity on the basis of the detection. Further, though the imaging means uses the camera to calculate the direction, size and intensity of the light source, the distance measurement to the light source may be calculated by using a radar or a laser.

As has been explained above, the variable transmissivity window system in accordance with the embodiment of the present invention has such arrangement and function/operation as follow. That is, the variable transmissivity window system of the present embodiment comprises an imaging unit for recognizing light giving glare to an occupant, a transmissivity control unit for controlling the transmissivity of the windshield on the basis of information sent from the imaging unit, and a transmissivity modifying unit for modifying the transmissivity of each of blocks into which the windshield is divided. With this arrangement, the system can weaken a high level of light directed to occupant's eye through the windshield. Further, the imaging unit has a function of calculating the direction, size and intensity of the light source. With this function, a position and range of the windshield for the transmissivity to be modified can be identified and the transmissivity can be determined. The imaging unit also has a function of changing the threshold to decide whether or not the light source is to be anti-glared according to the ambient light level. With this function, light giving glare to the occupant can be accurately decided.

The variable transmissivity window system of the present embodiment comprises, in addition to the above-mentioned constituent elements, an occupant detecting unit for detecting occupant's face. With this arrangement, the transmissivity modification position of each block in the windshield can be determined according to the occupant's face position, in particular, occupant's eye position. The occupant detecting unit includes any of the camera, seat position sensor, pressure sensor, and weight sensor, or a combination thereof. With this structure, the position of occupant's face can be accurately decided and the windshield block for the transmissivity to be modified can be accurately calculated.

The variable transmissivity window system of the present embodiment also comprises an imaging unit for recognizing light giving glare to an occupant, a transmissivity control unit for controlling the transmissivity of a windshield on the basis of information sent from the imaging unit, a transmissivity modifying unit for modifying the transmissivity of each of small blocks into which the windshield is divided on the basis of information from the transmissivity control unit, and a vehicle control changing unit for changing vehicle control on the basis of the information from the imaging unit. With this arrangement, when the system recognizes light giving glare to the occupant, the system can change the vehicle control. Further, when the system recognizes light giving glare to the occupant, the vehicle control changing unit features shifting a lane width to issue a lane departure warning. As a result, when the occupant gets glare from the light, the timing of issuing the lane departure warning can be advanced. Further, the vehicle control unit features changing the acceleration control of the vehicle when the system recognizes the light giving glare to the occupant. As a result, when the light giving glare to the occupant comes, the acceleration control can be changed (more specifically, no acceleration control can be given).

The variable transmissivity window system of the present embodiment also comprises an imaging unit for recognizing light giving glare to an occupant, a transmissivity control unit for controlling the transmissivity of a windshield on the basis of information from the imaging unit, a transmissivity modifying unit for modifying the transmissivity of each of small blocks into which the windshield is divided on the basis of information from the transmissivity control unit, a video output deciding unit for deciding whether or not a photographed video is displayed on a display device on the basis of the information from the imaging unit, and a video display unit for displaying the video. With this arrangement, when the system recognize light giving glare to the occupant, the video can be displayed on the display device of the vehicle. Further, when the system recognizes the occupant glaring light, the video display unit features displaying a video of a scene around the occupant glaring light. As a result, when the light giving glare to the occupant comes, the system can display the video of the scene including the glaring light source.

The variable transmissivity window system of the present embodiment comprises an imaging unit for recognizing light giving glare to an occupant, a transmissivity control unit for controlling the transmissivity of a windshield on the basis of information from the imaging unit, and a transmissivity modifying unit for modifying the transmissivity of each of small blocks into which the windshield is divided. The transmissivity control unit has a function of stepwise or gradually changing the transmissivities of the blocks from one having a lowered transmissivity to another one having a high transmissivity. With this function, the occupant can be prevented from noticing any boundary between the blocks having a lowered transmissivity and a not-lowered transmissivity.

The variable transmissivity window system of the present embodiment also comprises an imaging unit for recognizing light giving glare to an occupant, a transmissivity control unit for controlling the transmissivity of a windshield on the basis of information from the imaging unit, and a transmissivity modifying unit for modifying the transmissivity of each of small blocks into which the windshield is divided on the basis of information from the transmissivity control unit. The imaging unit features calculating a light source, that is, calculating a distance to the light source on the basis of information from a radar or a laser. As a result, the system can accurately calculate the position of the light source and accurately calculate the windshield block for the transmissivity to be modified.

It should be further understood by those skilled in the art that although the foregoing description has been made on embodiments of the invention, the invention is not limited thereto and various changes and modifications may be made without departing from the scope of the appended claims.

**Claims**

1. A variable transmissivity window system comprising:

    an imaging unit (101) for detecting and processing light from a light source;

a transmissivity control unit (103) for controlling a transmissivity of light passed through a windshield (102) on the basis of light source information from said imaging unit; and

a transmissivity modifying unit (106) for modifying a transmissivity of each of blocks into which said windshield is divided on the basis of control information from said transmissivity control unit,

wherein said imaging unit (101) calculates the light source information including a direction and size of the light source, and said transmissivity control unit (103) calculates a position of said windshield block for the transmissivity to be modified, a position range thereof for the transmissivity to be modified, and a value for the transmissivity to be modified and controls said transmissivity modifying unit (106) on the basis of said light source information and

said imaging unit (101) decides whether or not said light source issues light giving glare to an occupant located behind said windshield (102), and when said imaging unit decides that said light source issues light giving glare to the occupant, said imaging unit issues an instruction to modify the transmissivity of said windshield block, **characterised in that** a threshold for use in the glare decision is changed according to an ambient light level outside said windshield, wherein the ambient light level outside said windshield (102) is calculated with use of part of an image taken by said imaging unit (101).

2. A variable transmissivity window system according to claim 1, wherein said transmissivity control unit (103) calculates a position of said windshield block for the transmissivity to be modified, a position range for the transmissivity to be modified, and a value for the transmissivity to be modified, and controls said transmissivity modifying unit (106), on the basis of said light source information including a direction, a size, and an intensity of said light source and a correspondence relation table of the transmissivity of said windshield block previously found from the light source information.

3. A variable transmissivity window system according to claim 1 or 2, further comprising:

a detection unit (120) for detecting a position of an eye of an occupant located behind said windshield,

wherein said imaging unit (101) calculates the light source information including a direction, size, and intensity of the light source, said transmissivity control unit (103) calculates a position of said windshield block for the transmissivity to be modified, a range of the position for the transmissivity to be modified, and a value for the transmissivity to be modified and controls said transmissivity modifying unit (106), on the basis of said light source information issued from said imaging unit and information about the occupant's eye position issued from said detection unit.

4. A variable transmissivity window system according to claim 3, wherein said detection unit (120) is a measurement unit for measuring a camera (116) for photographing said occupant and/or a position of an occupant's seat.

5. A variable transmissivity window system according to at least one of claims 1 to 4, further comprising:

an imaging unit (101) for detecting and processing light from a light source giving glare to an occupant located in a vehicle; and

a vehicle control unit (104) for controlling steering or acceleration of the vehicle on the basis of the light source information from said imaging unit,

wherein said imaging unit (101) calculates the light source information including a direction, size, and intensity of the light source, said transmissivity control unit (103) calculates a position of said windshield block for the transmissivity to be modified, a range of the position for the transmissivity to be modified, and a value for the transmissivity to be modified, and controls said transmissivity modifying unit (106) on the basis of said light source information, and when the light source information issued from said imaging unit exceeds a glare threshold, said imaging unit causes said vehicle control unit (104) to be operated.

6. A variable transmissivity window system according to claim 5, wherein, when said light source information exceeds the glare threshold, said vehicle control unit changes and sets a lane departure range at a narrow threshold, and when the vehicle reaches said narrow threshold, the vehicle control unit issues an alarm.

7. A variable transmissivity window system according to claim 5, wherein, when said light source information exceeds the glare threshold, said vehicle control unit controls the vehicle so as not to execute acceleration control of the vehicle.

8. A variable transmissivity window system according to at least one of claims 1 to 7, further comprising:

an imaging unit (101) for detecting and processing light from a light source giving glare to an occupant located within a vehicle;
and
a video display unit (105) for displaying video information from said imaging unit,

wherein said imaging unit (101) calculates the light source information including a direction, size, and intensity of the light source, said transmissivity control unit (103) calculates a position of said windshield for the transmissivity to be modified, a range of the position for the transmissivity to be modified, and a value for the transmissivity to be modified, and controls said transmissivity modifying unit (106) on the basis of said light source information, and when the light source information issued from said imaging unit exceeds a glare threshold, said transmissivity control unit causes said video display unit to display a video of a scene around said glaring light source.

9. A variable transmissivity window system according to claim 1, wherein said transmissivity control unit (103) stepwise modifies transmissivities of the windshield blocks from one for the transmissivity to be lowered to another one for the transmissivity not to be lowered.

10. A variable transmissivity window system according to claim 1, wherein a transmissivity modification position change switch (117) for changing the transmissivity modification position and/or the transmissivity modification position range of said windshield block calculated by said transmissivity control unit (103) is provided.

11. A variable transmissivity window system according to claim 3, wherein said transmissivity control unit (103) stepwise modifies transmissivities of the windshield blocks from one for the transmissivity to be lowered to another one for the transmissivity not to be lowered.

12. A variable transmissivity window system according to claim 3, wherein a transmissivity modification position change switch (117) for changing the transmissivity modification position and/or the transmissivity modification position range of said windshield block calculated by said transmissivity control unit (103) is provided.

**Patentansprüche**

1. Fenstersystem mit variablem Transmissionsgrad, das umfasst:

eine Bilderzeugungseinheit (101), um Licht von einer Lichtquelle zu erfassen und zu verarbeiten;
eine Transmissionsgrad-Steuereinheit (103), um einen Transmissionsgrad von durch eine Windschutzscheibe (102) durchgelassenem Licht anhand der Lichtquelleninformationen von der Bilderzeugungseinheit zu steuern; und
eine Transmissionsgrad-Modifizierungseinheit (106), um einen Transmissionsgrad jedes der Blöcke, in die die Windschutzscheibe unterteilt ist, anhand der Steuerinformationen von der Transmissionsgrad-Steuereinheit zu modifizieren,
wobei die Bilderzeugungseinheit (101) die Lichtquelleninformationen, die eine Richtung und eine Größe der Lichtquelle enthalten, berechnet und die Transmissionsgrad-Steuereinheit (103) eine Position des Windschutzscheibenblocks für den zu modifizierenden Transmissionsgrad, einen Positionsbereich hiervon für den zu modifizierenden Transmissionsgrad und einen Wert für den zu modifizierenden Transmissionsgrad berechnet und die Transmissionsgrad-Modifikationseinheit (106) anhand der Lichtquelleninformationen steuert; und
die Bilderzeugungseinheit (101) entscheidet, ob die Lichtquelle Licht ausgibt, das einen hinter der Windschutzscheibe (102) befindlichen Insassen blendet, wobei dann, wenn die Bilderzeugungseinheit entscheidet, dass die Lichtquelle Licht ausgibt, die den Insassen blendet, die Bilderzeugungseinheit einen Befehl ausgibt, um den Transmissionsgrad des Windschutzscheibenblocks zu modifizieren, **dadurch gekennzeichnet, dass** ein Schwellenwert für die Verwendung bei der Blendungsentscheidung in Übereinstimmung mit einem Umgebungslichtpegel außerhalb der Windschutzscheibe geändert wird, wobei
der Umgebungslichtpegel außerhalb der Windschutzscheibe (102) unter Verwendung eines Teils eines Bildes, das durch die Bilderzeugungseinheit (101) aufgenommen wird, berechnet wird.

2. Fenstersystem mit variablem Transmissionsgrad nach Anspruch 1, wobei die Transmissionsgrad-Steuereinheit (103) eine Position des Windschutzscheibenblocks für den zu modifizierenden Transmissionsgrad, einen Positionsbereich für den zu modifizierenden Transmissionsgrad und einen Wert für den zu modifizierenden Transmissionsgrad berechnet und die Transmissionsgrad-Modifikationseinheit (106) anhand der Lichtquelleninformationen, die eine Richtung, eine Größe und eine Intensität der Lichtquelle enthalten, und einer Korrespondenzbeziehungstabelle des Transmissionsgrades des Windschutzscheibenblocks, der vorher anhand der Lichtquelleninformationen ermittelt worden ist, berechnet.

3. Fenstersystem mit variablem Transmissionsgrad nach Anspruch 1 oder 2, ferner mit:

    einer Erfassungseinheit (120), um eine Position eines Auges eines hinter der Windschutzscheibe befindlichen Insassen zu erfassen,

    wobei die Bilderzeugungseinheit (101) die Lichtquelleninformationen, die eine Richtung, eine Größe und eine Intensität der Lichtquelle enthalten, berechnet, wobei die Transmissionsgrad-Steuereinheit (103) eine Position des Windschutzscheibenblocks, dessen Transmissionsgrad modifiziert werden soll, einen Bereich der Position für den zu modifizierenden Transmissionsgrad und einen Wert für den zu modifizierenden Transmissionsgrad berechnet und die Transmissionsgrad-Modifikationseinheit (106) anhand der von der Bilderzeugungseinheit ausgegebenen Lichtquelleninformationen und der Informationen über die Position des Auges des Insassen, die von der Erfassungseinheit ausgegeben werden, steuert.

4. Fenstersystem mit variablem Transmissionsgrad nach Anspruch 3, wobei die Erfassungseinheit (120) eine Messeinheit ist, um eine Kamera (116) zum Photographieren des Insassen und/oder einer Position eines Insassensitzes zu vermessen.

5. Fenstersystem mit variablem Transmissionsgrad nach wenigstens einem der Ansprüche 1 bis 4, ferner mit:

    einer Bilderzeugungseinheit (101), um Licht von einer Lichtquelle, die einen in einem Fahrzeug befindlichen Insassen blendet, zu erfassen und zu verarbeiten; und
    einer Fahrzeugsteuereinheit (104), um das Lenken oder Beschleunigen des Fahrzeugs anhand der Lichtquelleninformationen von der Bilderzeugungseinheit zu steuern,

    wobei die Bilderzeugungseinheit (101) die Lichtquelleninformationen, die eine Richtung, eine Größe und eine Intensität der Lichtquelle enthalten, berechnet, und die Transmissionsgrad-Steuereinheit (103) eine Position des Windschutzscheibenblocks, dessen Transmissionsgrad modifiziert werden soll, einen Bereich der Position für den zu modifizierenden Transmissionsgrad und einen Wert für den zu modifizierenden Transmissionsgrad berechnet und die Transmissionsgrad-Modifikationseinheit (106) anhand der Lichtquelleninformationen steuert, wobei die Bilderzeugungseinheit dann, wenn die von der Bilderzeugungseinheit ausgegebenen Lichtquelleninformationen einen Blendschwellenwert übersteigen, den Betrieb der Fahrzeugsteuereinheit (104) veranlasst.

6. Fenstersystem mit variablem Transmissionsgrad nach Anspruch 5, wobei die Fahrzeugsteuereinheit dann, wenn die Lichtquelleninformationen den Blendschwellenwert übersteigen, einen Fahrbahnabweichungsbereich auf einen kleinen Schwellenwert ändert und setzt, wobei die Fahrzeugsteuereinheit dann, wenn das Fahrzeug den kleinen Schwellenwert erreicht, einen Alarm ausgibt.

7. Fenstersystem mit variablem Transmissionsgrad nach Anspruch 5, wobei die Fahrzeugsteuereinheit dann, wenn die Lichtquelleninformationen den Blendschwellenwert übersteigen, das Fahrzeug so steuert, dass keine Beschleunigungssteuerung des Fahrzeugs erfolgt.

8. Fenstersystem mit variablem Transmissionsgrad nach wenigstens einem der Ansprüche 1 bis 7, das ferner umfasst:

    eine Bilderzeugungseinheit (101), um Licht von einer Lichtquelle, die einen in einem Fahrzeug befindlichen Insassen blendet, zu erfassen und zu verarbeiten; und
    eine Videoanzeigeeinheit (105), um Videoinformationen von der Bilderzeugungseinheit anzuzeigen,

    wobei die Bilderzeugungseinheit (101) die Lichtquelleninformationen, die eine Richtung, eine Größe und eine Intensität der Lichtquelle enthalten, berechnet und die Transmissionsgrad-Steuereinheit (103) eine Position der Windschutzscheibe, deren Transmissionsgrad modifiziert werden soll, einen Bereich der Position für den zu modifizierenden Transmissionsgrad und einen Wert für den zu modifizierende Transmissionsgrad berechnet und die Transmissionsgrad-Modifikationseinheit (106) anhand der Lichtquelleninformationen steuert, wobei die Transmissionsgrad-Steuereinheit dann, wenn die von der Bilderzeugungseinheit ausgegebenen Lichtquelleninformationen einen Blendschwellenwert übersteigen, die Videoanzeigeeinheit dazu veranlasst, eine Videoanzeige einer Szene um die blendende Lichtquelle anzuzeigen.

9. Fenstersystem mit variablem Transmissionsgrad nach Anspruch 1, wobei die Transmissionsgrad-Steuereinheit (103) Transmissionsgrade der Windschutzscheibenblöcke von einem Transmissionsgrad, für den der Transmissionsgrad gesenkt werden sollte, zu einem weiteren Transmissionsgrad, für den der Transmissionsgrad nicht gesenkt werden sollte, schrittweise modifiziert.

10. Fenstersystem mit variablem Transmissionsgrad nach Anspruch 1, wobei ein Transmissionsgradmodifikationspositions-Änderungsschalter (117) zum Ändern der Transmissionsgradmodifikationsposition und/oder des Transmissionsgradmodifikationspositions-Bereichs des durch die Transmissionsgrad-Steuereinheit (103) berechneten Windschutzscheibenblocks vorgesehen ist.

11. Fenstersystem mit variablem Transmissionsgrad nach Anspruch 3, wobei die Transmissionsgrad-Steuereinheit (103) Transmissionsgrade der Windschutzscheibenblöcke von einem Transmissionsgrad, für den der Transmissionsgrad gesenkt werden sollte, zu einem weiteren Transmissionsgrad, für den der Transmissionsgrad nicht gesenkt werden sollte, schrittweise modifiziert.

12. Fenstersystem mit variablem Transmissionsgrad nach Anspruch 3, wobei ein Transmissionsgradmodifikationspositions-Änderungsschalter (117) zum Ändern der Transmissionsgradmodifikationsposition und/oder des Transmissionsgradmodifikationspositions-Bereichs des durch die Transmissionsgrad-Steuereinheit (103) berechneten Windschutzscheibenblocks vorgesehen ist.

**Revendications**

1. Système de fenêtre à transmittivité variable comportant :

   une unité d'imagerie (101) pour détecter et traiter une lumière provenant d'une source lumineuse,
   une unité de commande de transmittivité (103) pour commander une transmittivité de lumière circulant à travers un pare-brise (102) sur la base d'informations de source lumineuse provenant de ladite unité d'imagerie, et
   une unité de modification de transmittivité (106) pour modifier une transmittivité de chacun des blocs en lesquels ledit pare-brise est divisé sur la base d'informations de commande provenant de ladite unité de commande de transmittivité,
   dans lequel ladite unité d'imagerie (101) calcule les informations de source lumineuse incluant une direction et une taille de la source lumineuse, et ladite unité de commande de transmittivité (103) calcule une position dudit bloc de pare-brise pour la transmittivité à modifier, une plage de la position correspondante pour la transmittivité à modifier, et une valeur pour la transmittivité à modifier et commande ladite unité de modification de transmittivité (106) sur la base desdites informations de source lumineuse, et
   ladite unité d'imagerie (101) détermine si oui ou non ladite source lumineuse émet de la lumière provoquant un éblouissement d'un occupant installé derrière ledit pare-brise (102), et lorsque ladite unité d'imagerie détermine que ladite source lumineuse émet de la lumière provoquant un éblouissement de l'occupant, ladite unité d'imagerie émet une instruction afin de modifier la transmittivité dudit bloc de pare-brise, **caractérisé en ce qu'**un seuil à utiliser dans la détermination d'éblouissement est changé conformément à un niveau de lumière ambiante à l'extérieur dudit pare-brise, le niveau de lumière ambiante à l'extérieur dudit pare-brise (102) étant calculé en utilisant une partie d'une image prise par ladite unité d'imagerie (101).

2. Système de fenêtre à transmittivité variable selon la revendication 1, dans lequel ladite unité de commande de transmittivité (103) calcule une position dudit bloc de pare-brise pour la transmittivité à modifier, une plage de la position pour la transmittivité à modifier, et une valeur pour la transmittivité à modifier, et commande ladite unité de modification de transmittivité (106), sur la base desdites informations de source lumineuse incluant une direction, une taille et une intensité de ladite source lumineuse et une table de relation de correspondance de la transmittivité dudit bloc de pare-brise précédemment trouvé à partir des informations de source lumineuse.

3. Système de fenêtre à transmittivité variable selon la revendication 1 ou 2, comportant en outre :

   une unité de détection (120) pour détecter une position d'un oeil d'un occupant installé derrière ledit pare-brise,

dans lequel ladite unité d'imagerie (101) calcule les informations de source lumineuse incluant une direction, une taille et une intensité de la source lumineuse, ladite unité de commande de transmittivité (103) calcule une position dudit bloc de pare-brise pour la transmittivité à modifier, une plage de la position pour la transmittivité à modifier, et une valeur pour la transmittivité à modifier et commande ladite unité de modification de la transmittivité (106), sur la base desdites informations de source lumineuse émises par ladite unité d'imagerie et des informations concernant la position de l'oeil de l'occupant émises par ladite unité de détection.

4. Système de fenêtre à transmittivité variable selon la revendication 3, dans lequel ladite unité de détection (120) est une unité de mesure pour mesurer un appareil photographique (116) afin de photographier ledit occupant et/ou une position d'un siège de l'occupant.

5. Système de fenêtre à transmittivité variable selon au moins l'une des revendications 1 à 4, comportant en outre :

une unité d'imagerie (101) pour détecter et traiter de la lumière provenant d'une source lumineuse provoquant un éblouissement d'un occupant installé dans un véhicule, et
une unité de commande de véhicule (104) pour commander la conduite ou l'accélération du véhicule sur la base des informations de source lumineuse provenant de ladite unité d'imagerie, ladite unité d'imagerie (101) calculant les informations de source lumineuse incluant une direction, une taille et une intensité de la source lumineuse, ladite unité de commande de transmittivité (103) calcule une position dudit bloc de pare-brise pour la transmittivité à modifier, une plage de la position pour la transmittivité à modifier, et une valeur pour la transmittivité à modifier, et commande ladite unité de modification de transmittivité (106) sur la base desdites informations de source lumineuse, et lorsque les informations de source lumineuse émises par ladite unité d'imagerie dépassent un seuil d'éblouissement, ladite unité d'imagerie engendre l'actionnement de ladite unité de commande de véhicule (104).

6. Système de fenêtre à transmittivité variable selon la revendication 5, dans lequel, lorsque lesdites informations de source lumineuse dépassent le seuil d'éblouissement, ladite unité de commande de véhicule change et définit une plage de suivi de voie à un seuil réduit, et lorsque le véhicule atteint ledit seuil réduit, l'unité de commande de véhicule émet une alarme.

7. Système de fenêtre à transmittivité variable selon la revendication 5, dans lequel, lorsque lesdites informations de source lumineuse dépassent le seuil d'éblouissement, ladite unité de commande de véhicule commande le véhicule de manière à ne pas exécuter de commande d'accélération du véhicule.

8. Système de fenêtre à transmittivité variable selon au moins l'une des revendications 1 à 7, comportant en outre :

une unité d'imagerie (101) pour détecter et traiter de la lumière provenant d'une source lumineuse provoquant un éblouissement d'un occupant installé dans un véhicule, et
une unité d'affichage vidéo (105) pour afficher des informations vidéo en provenance de ladite unité d'imagerie,

dans lequel ladite unité d'imagerie (101) calcule les informations de source lumineuse incluant une direction, une taille et une intensité de la source lumineuse, ladite unité de commande de transmittivité (103) calcule une position dudit pare-brise pour la transmittivité à modifier, une plage de la position pour la transmittivité à modifier, et une valeur pour la transmittivité à modifier, et commande ladite unité de modification de transmittivité (106) sur la base desdites informations de source lumineuse, et lorsque les informations de source lumineuse émises par ladite unité d'imagerie dépassent un seuil d'éblouissement, ladite unité de commande de transmittivité amène ladite unité d'affichage vidéo à afficher une vidéo d'une scène autour de ladite source lumineuse éblouissante.

9. Système de fenêtre à transmittivité variable selon la revendication 1, dans lequel ladite unité de commande de transmittivité (103) modifie pas à pas les transmittivités des blocs de pare-brise à partir d'un bloc pour lequel la transmittivité doit être réduite jusqu'à un autre bloc pour lequel la transmittivité ne doit pas être réduite.

10. Système de fenêtre à transmittivité variable selon la revendication 1, dans lequel un commutateur de changement de position de modification de transmittivité (117) pour changer la position de modification de transmittivité et/ou la plage de la position de modification de transmittivité dudit bloc de pare-brise calculée par ladite unité de commande de transmittivité (103) est fourni.

**11.** Système de fenêtre à transmittivité variable selon la revendication 3, dans lequel ladite unité de commande de transmittivité (103) modifie pas à pas les transmittivités des blocs de pare-brise à partir d'un bloc pour lequel la transmittivité doit être réduite jusqu'à un autre bloc pour lequel la transmittivité ne doit pas être réduite.

**12.** Système de fenêtre à transmittivité variable selon la revendication 3, dans lequel un commutateur de changement de position de modification de transmittivité (117) pour changer la position de modification de transmittivité et/ou la plage de la position de modification de transmittivité dudit bloc de pare-brise calculée par ladite unité de commande de transmittivité (103) est fourni.

# FIG. 1

# FIG. 2

EP 1 683 668 B1

# FIG. 3

FIG. 4

SEAT POSITION MEASURING UNIT

COMMUNICATION I/F

CPU

120

VEHICLE CONTROL UNIT

COMMUNICATION I/F

CPU

104

TRANSMISSIVITY CONTROL UNIT

EEPROM

COMMUNICATION I/F

CPU

103

DRIVER CIRCUIT

107

DRIVER CIRCUIT

107

X1 ·Xi· Xn

Y1

·Yj·

Yn

TRANSMISSIVITY 106 MODIFYING UNIT

DATA COMMUNICATION

101

116

CAMERA

COMMUNICATION I/F

CPU

IMAGE PROCESSING LSI

IMAGE MEMORY

IMAGE DEVICE

CAMERA

COMMUNICATION I/F

CPU

IMAGE PROCESSING LSI

IMAGE MEMORY

IMAGE DEVICE

VIDEO OUTPUT I/F

105

115

TRANSMISSIVITY MODIFICATION POSITION CHANGE SWITCH

117

VIDEO DISPLAY UNIT

# FIG. 5

102  121 122 121  102

106 TRANSMISSIVITY MODIFYING UNIT

# FIG. 6A

ORIGINAL IMAGE

# FIG. 6B

BINARIZED IMAGE

# FIG. 7

START

DECIDE AMBIENT
LIGHT LEVEL — 201

DECIDE SHUTTER VALUE FOR
VIDEO TO BE CAPTURED — 202

CAPTURE VIDEO — 203

CONVERT IT TO BINARIZED
IMAGE — 204

CALCULATE LIGHT SOURCE
POSITION AND REGION — 205

CALCULATE LIGHT LEVEL OF
LIGHT SOURCE — 206

TRANSMIT LIGHT SOURCE
POSITION, REGION AND LIGHT
LEVEL DATA TO TRANSMISSIVITY
CONTROL UNIT — 207

RETURN

# FIG. 8

```
          ┌─────────────┐
          │    START    │
          └─────────────┘
                 │
    ┌─────────────────────────────┐
    │  READ OUT DATA OF EEPROM    │─── 301
    └─────────────────────────────┘
                 │
    ┌─────────────────────────────┐
    │   RECEIVE LIGHT SOURCE       │─── 302
    │ POSITION, REGION AND LIGHT   │
    │        LEVEL DATA            │
    └─────────────────────────────┘
                 │
    ┌─────────────────────────────┐
    │  CALCULATE LOCATION FOR      │─── 303
    │   TRANSMISSIVITY TO BE       │
    │ MODIFIED BY TRANSMISSIVITY   │
    │      MODIFYING UNIT          │
    └─────────────────────────────┘
                 │
    ┌─────────────────────────────┐
    │  CALCULATE TRANSMISSIVITY    │─── 304
    │    OF TRANSMISSIVITY         │
    │      MODIFYING UNIT          │
    └─────────────────────────────┘
                 │
    ┌─────────────────────────────┐
    │   CALCULATE REGION FOR       │
    │   TRANSMISSIVITY TO BE       │─── 305
    │  STEPWISE MODIFIED AND       │
    │ TRANSMISSIVITY OF REGION     │
    └─────────────────────────────┘
                 │
    ┌─────────────────────────────┐
    │ OUTPUT SIGNAL TO DRIVER      │─── 306
    │        CIRCUIT               │
    └─────────────────────────────┘
                 │
                 ▼
          ┌─────────────┐
          │   RETURN    │
          └─────────────┘
```

# FIG. 9

HEADREST POSITION
DETECTING SENSOR

PRESSURE SENSOR

SEAT TILE SENSOR

FORWARD/BACKWARD
SEAT POSITION SENSOR

# FIG. 10

Xp

HORIZONTAL
DIRECTION (i)

VERTICAL DIRECTION (j)

Yp

# FIG. 11

# FIG. 12

# FIG. 13

# FIG. 14

**EP 1 683 668 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5203906 A
- DE 19814094 A1
- WO 03074307 A1
- DE 19952945 A1